# EUROPEAN PATENT APPLICATION

(11) **EP 2 325 256 A1**
(43) Date of publication of application: **25.05.2011**
(21) Application number: 09813015.6
(22) Date of filing: 31.08.2009
(51) Int. Cl.: C08L 67/00, B29C 45/00, C08K 5/29, F16C 33/44, F16C 33/78, C08L 101/16

(54) **INJECTION-MOLDED BODY, RESIN SLIDE BEARING, RESIN GEARWHEEL, CROWN-SHAPED RESIN HOLDER, RESIN SEAL, AND ROLLER BEARING**

(30) Priority: 10.09.2008 JP 2008232503; 28.08.2009 JP 2009197965
(71) Applicant: NTN Corporation, Osaka-shi, Osaka 550-0003 (JP)
(72) Inventor: SHIMAZU, Eiichirou, Kuwana-shi Mie 511-0867 (JP); EGARNI, Masaki, Kuwana-shi Mie 511-0867 (JP); HIMENO, Yoshihide, Kuwana-shi Mie 511-0867 (JP)
(74) Representative: White, Duncan Rohan
(86) International application number: PCT/JP2009/065182
(87) International publication number: WO 2010/029869

(57) **Abstract**

It is an object of the present invention to provide an injection-molded article such as a resin-made cage, a resin-made seal, a resin-made sliding bearing, and a resin-made gear having reliable flowability, enhanced mechanical strength and toughness, and improved wear resistance. A resin composition is composed of a biodegradable polyester polymer particularly polybutylene succinate to which not less than 10 wt% nor more than 40 wt% of a fibrous inorganic reinforcing material and not less than 0.5 wt% nor more than 10 wt% of polycarbodiimide resin are added. The injection-molded article is obtained by injection molding the resin composition.

## Description

### TECHNICAL FIELD

The present invention relates to an injection-molded article, a resin-made sliding bearing, a resin-made gear, a resin-made crown-shaped cage for a rolling bearing, a resin-made seal for the rolling bearing, and the rolling bearing.

### BACKGROUND ART

As resin-made sliding members for use in a bearing and particularly resin-made sliding members constructing a cage and a seal, members such as engineering plastics derived from fossil resources and synthetic rubber which are not decomposed in natural environment have been adopted. But awareness on environmental issues has increased. Consequently as environmentally compatible products not worsening the global environment, bearing makers have proposed cages, seals, sliding bearings, gears made of biodegradable resin moldings (see patent documents 1 through 3).

A biodegradable plastic composition whose biodegradation rate is adjusted by adding a carbodiimide compound to a biodegradable plastic material is known (see patent document 4).

Moldings composed of a sliding resin composition for use in parts constructing machine elements such as a resin-made cage, a resin-made seal, a resin-made sliding bearing, a resin-made gear, and the like are required to have mechanical properties such as rigidity, fatigue resistance, and toughness and chemical/mechanical properties such as oil resistance and wear resistance. It is often difficult for biodegradable resin to satisfy functions demanded in the mechanical strength, rigidity, flexibility, and wear resistance. Thus normally the resin-made cage and the resin-made seal for a rolling bearing contain a large amount of a reinforcing material consisting of an inorganic matter such as glass fibers, carbon fibers, and the like, additives such as a toughness imparting agent and a flexibility improving agent such as a rubber component, and an additive such as an oil resistance improving agent.

But the improvement of the strength of a resin material by adding the reinforcing material thereto lowers the toughness indicated by mechanical stretch and strain and deteriorates flowability thereof at the time of an injection molding.

Therefore for example, supposing that the amount of an inorganic material to be added to the polymer is increased to improve the mechanical strength and rigidity of the resin composition, the toughness thereof becomes insufficient. Thus the productivity of the cage is seriously impaired in the injection molding. For example, a pocket portion of the resin-made cage for holding a rolling element such as a ball and a roller is forcibly drawn out in taking out the injection-molded resin composition from a molding die. A lip portion of the resin-made seal disposed at an inside diameter side thereof is also often forcibly drawn out. In addition in an operation of assembling a cage or in an operation of mounting the cage or the seal on a bearing, they may be deformed like snap fit. In the above-described forcible draw-out operation and assembling operation inwhich the cage and the seal are deformed, what is demanded is not a strength but resistance to strain. Thus even though a material has a high strength, whitening, crack occur owing to the generation of crazing when the forcible draw-out is performed if the material has a low toughness. In some cases, breakage occurs.

The resin-made cage and the resin-made seal produced by using the injection molding have an advantage that complicated configurations thereof can be more economically produced than a cage produced from a metal or the like by means of press. But when strength is imparted to the resin-made cage, the resin-made seal, and the like by the addition of a large amount of an inorganic adding material, the flowability at a molding time deteriorates. Thus the resin-made cage and the like have a problem that the degree of freedom of the configuration thereof which is an advantage thereof is outstandingly restricted.

In addition because the matrix of the biodegradable resin material does not have a high wear resistance and is limited in its application range as a sliding member, the biodegradable resin material is demanded to have improved wear resistance when the biodegradable resin material is used for the resin-made sliding bearing and the resin-made gear.

### PRICE ART DOCUMENTS

### PATENT DOCUMENTS

Patent document 1: Patent No. 3993377
Patent document 2: Japanese Patent Application Laid-Open No. 2009-068913
Patent document 3: Japanese Patent Application Laid-Open No. 10-212400
Patent document 4: Patent No. 3776578

### SUMMARY OF THE INVENTION

### PROBLEM TO BE SOLVED BY THE INVENTION

The present invention has been made to cope with the above-described problems. It is an object of the present invention to provide an injection-molded article such as a resin-made cage, a resin-made seal, a resin-made sliding bearing, and a resin-made gear having reliable flowability, enhanced mechanical strength and toughness, and improved wear resistance.

### MEANS FOR SOLVING THE PROBLEM

The injection-molded article of the present invention consists of a resin composition composed of a polymer having an ester bond in a molecule thereof, an inorganic reinforcing material, and an organic substance having a carbodiimide structure.

The polymer having the ester bond in the molecule thereof is a biodegradable polyester polymer consisting of polybutylene succinate.

The inorganic reinforcing material contained in the resin composition is fibrous. An addition amount of the inorganic reinforcing material is not less than 10 wt% nor more than 40 wt% for the entire resin composition.

In the injection-molded article of the present invention, the organic substance, having the carbodiimide structure, which is contained in the resin composition is polycarbodiimide resin. An addition amount of the polycarbodiimide resin for the entire resin composition is not less than 0.5 wt% nor more than 10 wt%.

The resin-made crown-shaped cage for a rolling bearing, the resin-made seal for the rolling bearing, the resin-made sliding bearing, and the resin-made gear of the present invention are made of the injection-molded article of the resin composition.

The rolling bearing of the present invention includes at least one of the resin-made crown-shaped cage and the resin-made seal of the present invention as a constituent element thereof.

### EFFECT OF THE INVENTION

Because the injection-molded article of the present invention is obtained by injection molding the resin composition formed by adding the inorganic reinforcing material and the organic substance having the carbodiimide structure to the polymer having the ester bond in its molecule, the injection-molded article is allowed to maintain excellent injection moldability and have improved mechanical strength and toughness.

Because the injection-molded article of the present invention has both the improved mechanical strength and toughness, the injection-molded article can be adapted to suit a case in which the injection-molded article has a portion to be forcibly drawn out when the injection-molded resin composition is taken out of a molding die and a case in which the injection-molded article is deformed like snap fit when it is assembled or used as a product. For example, a high-strength resin-made crown-shaped cage which has a complicated and thin configuration or the resin-made seal for a bearing can be produced by performing the injection molding.

Because the inj ection-molded article of the present invention has a high wear resistance, the injection-molded article is applicable as a resin-made sliding bearing and the resin-made gear can be produced.

### BRIEF DESCRIPTION OF THE DRAWINGS

Fig. 1 is a partly enlarged perspective view of a resin-made crown-shaped cage.
Fig. 2 is a cutout perspective view of a resin-made seal.
Fig. 3 is a sectional view of a grease-enclosed deep groove ball bearing.
Fig. 4 is a sectional view showing an example of a resin-made sliding bearing.
Fig. 5 is a sectional view showing another example of the resin-made sliding bearing.
Fig. 6 is a perspective view of a resin-made gear.
Fig. 7 is a schematic view of a friction and wear test conducted in the present invention.

### BEST MODE FOR CARRYING OUT THE INVENTION

The injection-molded article of the present invention is obtained by injection molding a resin composition formed by adding an inorganic reinforcing material and an organic substance having a carbodiimide structure to a polymer having an ester bond in its molecule.

As the polymer having the ester bond in its molecule, it is possible to use a polyester polymer which can be injection molding and has the ester bond in the polymer main chain without limiting the polyester polymer to an aliphatic polyester polymer and an aromatic polyester polymer. It is also possible to use the biodegradable polyester polymer, the polyester polymer made from fossil resources, and a so-called biomass polyester polymer made fromnatural resources (biomass) such as starch, sugar and the like.

The present invention is particularly effective for the biodegradable polyester polymer and the biomass polyester polymer which are difficult to be improved in both the strength and toughness thereof.

As the biodegradable polyester polymer, poly(α-hydroxyacid), poly(β-hydroxyalkanoate), poly(ω-hydroxyalkanoate), and polyalkylene alkanoate are listed.

As the poly(α-hydroxy acid), polylactic acid (hereinafter abbreviated as PLEA) and polyglycolic acid are exemplified. As the poly(β-hydroxyalkanoate), a hydroxyvaleric acid-hydroxybutyric acid copolymer is exemplified. As the polyalkylene alkanoate, a dehydration condensate (namely, polybutylene succinate (PBS)) of 1,4-butanediol and succinic acid and polyethylene terephthalate copolymers such as a polyethylene terephthalate-butylene adipate copolymer are exemplified. The PBS, the polyethylene terephthalate copolymers such as the polyethylene terephthalate-butylene adipate copolymer, polyhydroxybutyric acid, PLAs such as the L form, the D form, and the stereocomplex type, mixtures or copolymers thereof are favorable because these biodegradable polyester polymers are excellent in the heat resistance thereof. The PBS ismcre favorable.

Resins which can be produced by partly or entirely using a biomass-derived material are preferable because such resins are capable of contributing to a decrease of carbon dioxide emission. As examples of such resins, it is possible to list the PBS, the PLA, and the like.

Whether the biomass-derived material is used for resin can be determined by measuring the concentration of carbon 14 (¹⁴C) which is a radioisotope in the carbon composing the resin. Because the half-life of the ¹⁴C is 5730 years, the ¹⁴C is not contained in carbon, derived from the fossil resource, which is generated after not less than 10 million years elapsed. This indicates that when a member composed of a polymer contains the ¹⁴C, it is possible to determine that the biomass-derived material is used for the resin.

As the inorganic reinforcing material which can be contained in the resin composition, it is possible to use those which are well dispersed in the polymer and impart strength to the resin composition according to an object of use without limiting the kind and configuration thereof to a specific kind and configuration. As specific examples of the inorganic reinforcing material, fibrous fillers such as glass fibers, metal fibers, carbon fibers, potassium titanate whisker, zinc oxide whisker, calcium sulfate whisker, and aluminum borate whisker are listed. Inorganic compounding ingredients such as mica, talc, and the like are also listed.

In using the inorganic reinforcing material for the polymer such as a biodegradable resin, the addition amount of the inorganic reinforcing material is preferably 10 to 40 wt%. When the addition amount is less than 10 wt%, the strength of the injection-molded article is often insufficient, whereas when the addition amount is more than 40 wt%, the toughness thereof is often low and brittle. Thus there is a case in which the injection moldability of the resin composition is seriously impaired.

It is particularly unpreferable that the addition amount of the inorganic reinforcing material for the biodegradable resin exceeds 40 wt%, because the biodegradable resin loses its biodegradability.

As the organic substance, having the carbodiimide structure, which can be used in the present invention, it is preferable to use polycarbodiimide resin.

The polycarbodiimide resin is obtained by a decarboxylation condensation reaction between polyisocyanato and monoisocynate serving as a molecular weight regulator in the presence of a carbodiimidizing catalyst.

As the polyisocyanato, organic diisocyanates are preferable. For example, it is possible to list aromatic diisocyanate, aliphatic diisocyanate, alicyclic diisocyanate, and mixtures of these organic diisocyanates. Specifically it is possible to exemplify 1,5-naphthalene diisocyanate, 4,4'-diphenylmethane diisocyanate, 4,4'-diphenyldimethylmethane diisocyanate, phenylene diisocyanate, tolylene diisocyanate, hexamethylene diisocyanate, cyclohexane-1,4-diisocyanate, xylylene diisocyanate, isophorone diisocyanate, dicyclohexylmethane-4,4'-diisocyanate, methylcyclohexanediisocyanate, tetramethylxylylenediisocyanate, 2,6-diisopropylphenyl isocyanate, and 1,3,5-triisopropylbenzene-2,4-diisocyanate.

As the monoisocynate, it is possible to exemplify phenyl isocyanate, tolyl isocyanate, dimethylphenyl isocyanate, cyclohexyl isocyanate, butyl isocyanate, and naphthyl isocyanate.

As the carbodiimidizing catalyst, it is possible to exemplify 3-methyl-1-phenyl-2-phospholene-1-oxide, 3-methyl-1-ethyl-2-phospholene-1-oxide, 1,3-dimethyl-2-phospholene-1-oxide, 1-phenyl-2-phospholene-1-oxide, 1-ethyl-2-phospholene-1-oxide, 1-methyl-2-phospholene-1-oxide, and double-bond isomers of these carbodiimidizing catalysts. Of these carbodiimidizing catalysts, the 3-methyl-1-phenyl-2-phospholene-1-oxide which is industrially readily available is preferable.

As a commercially available product of the carbodiimide resin, CARBODILITE (commercial name) produced by Nisshinbo Chemical, Inc is exemplified.

The addition amount of the carbodiimide resin for the entire resin composition is preferably not less than 0.5 wt% nor more than 10 wt%. When the addition amount of the carbodiimide resin is less than 0.5 wt%, it is impossible to enhance the strength and toughness of the injection-molded article. When the addition amount of the carbodiimide resin is more than 10 wt%, the surface of the injection-molded article is liable to become sticky. Thereby there is a fear that defective molding occurs, i.e., the resin composition sticks to a molding die at a molding time or foreign matters adhere to the injection-molded article at an assembling time and a transport time.

Depending on use of the inj ection-molded article to be obtained by performing the injection molding, the resin composition is capable of containing additives such as a deterioration inhibitor and a deterioration prevention agent for restraining deterioration by heat, ultraviolet ray, oxidation or hydrolysis, a plasticizer and a softener for improving moldability and flexibility of the injection-molded article, an antistatic agent, a conductive agent; and a dispersant and a pigment.

It is possible to use a shock resistance improving method such as modification by rubber for improving the shock resistance of the molding and a heat resistance improving method of introducing a crosslinking structure by means of a radical generation agent, a crosslinking agent, radiations, and electron beams. 19-3 In addition, to improve the gas barrier property, waterproof property, repellency, heat resistance, and lubricity of the inj ection-molded article, it is possible to treat the surface thereof by using an inorganic matter such as diamond-like carbon (DLC) or by using an organic matter such as coating with resin.

In one form of the injection-molded article of the present invention to be obtained by injection-molding the resin composition, a portion of the injection-molded resin composition is forcibly drawn out when the injection-molded resin composition is taken out of a molding die. In the other form of the injection-molded article, the injection-molded article is deformed like a snap fit when it is fastened to other moldings or parts or used as a product. The injection-molded article of the present invention is allowed to maintain its excellent injection moldability and have both improved mechanical strength and toughness. Thus even the injection-molded article having the portion to be forcibly drawn out can be produced without deteriorating its productivity. As the injection-molded article having the portion to be forcibly drawn out and the injection-molded article which is deformed when it is assembled or used as a product, a resin-made crown-shaped cage for a rolling bearing, a resin-made cage required to be assembled, and a resin-made seal for the rolling bearing are exemplified.

Because the injection-molded article of the present invention maintains its excellent injection moldability and has improved wear resistance, the injection-molded article is applicable as a resin-made sliding bearing and a resin-made gear.

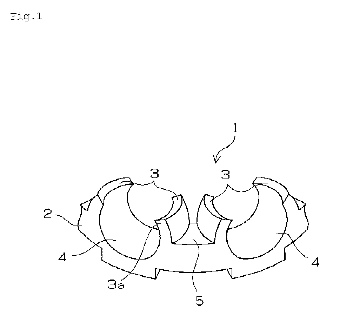

Fig. 1 shows an example of a resin-made crown-shaped cage, for a rolling bearing, which is an injection-malded article of the present invention. Fig. 1 is a partly enlarged perspective view of the resin-made crown-shaped cage formed by integrally molding a resin composition. In a cage 1 for the rolling bearing, two pairs of opposed cage claws 3 are formed on an upper surface of an annular cage body 2 at a certain interval in a circumferential direction, and the opposed cage claws 3 of each pair are curved in an approach direction, and a pocket 4 for holding a ball serving as a rolling element is formed between the opposed cage claws 3. A flat portion 5 is formed as a reference plane from which the cage claws 3 rise between the back surface of one of one pair of the opposed cage claws 3 between which the pocket 4 is formed and that of one of the other pair of the opposed cage claws 3 between which the adjacent pocket 4 is formed.

In forming the cage shown in Fig. 1 by the injection molding, a curved end of the cage claw 3 is forcibly drawn out when the injection-molded resin composition is taken out of a molding die. Therefore the curved end of the cage claw 3 may have crack or whitening.

Because the above-described resin composition is used in the present invention, it is possible to restrain the crack and the whitening from occurring at the time on the forcible draw-out.

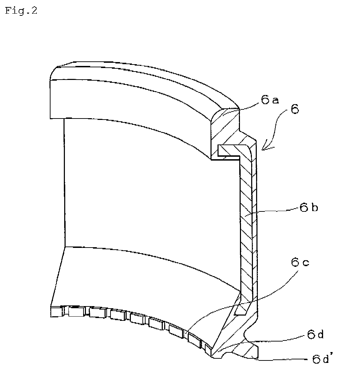

Fig. 2 shows an example of the resin-made seal, for a rolling bearing, which is the injection-molded article of the present invention. Fig. 2 is a cutout perspective view of the resin-made seal.

A resin-made seal 6 has a peripheral edge 6a to be locked to a locking groove of a sealing member formed on an inside diameter surface of an outer ring of the bearing, a metal plate (core) 6b reinforcing the sealing member, a seal lip 6d which slides a circumferential sealing groove formed at both sides of an inner ring raceway of the bearing, and cutouts 6c formed on the seal lip 6d in a radial direction of a shaft.

In forming the seal shown in Fig. 2 by the injection molding, the sealing lip 6d or 6d' is forcibly drawn out when the injection-molded resin composition is taken out of a molding die. Thus the sealing lip 6d or 6d' may have crack or whitening.

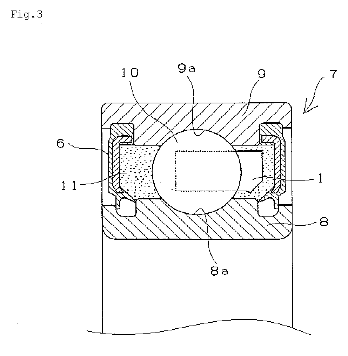

Because the above-described resin composition is used in the present invention, it is possible to restrain the crack and the whitening from occurring at the time of the forcible draw-out. 0023 Fig. 3 shows an example of a rolling bearing in which the resin-made crown-shaped cage and the resin-made seal are used. Fig. 3 is a sectional view of a grease-enclosed deep groove ball bearing.

In a grease-enclosed deep groove ball bearing 7, an inner ring 8 having a rolling surface 8a on an outer surface thereof and an outer ring 9 having a rolling surface 9a on an inner surface thereof are concentrically disposed, and a plurality of rolling elements 10 are interposed between the rolling surface 8a of the inner ring 8 and the rolling surface 9a of the outer ring 9. The grease-enclosed deep groove ball bearing 7 is constructed of a resin-made crown-shaped cage 1 holding a plurality of rolling elements 10 and a resin-made seal 6 fixed to the outer ring 9. Lubricating grease 11 is enclosed in the peripheral portion of the rolling elements 10.

At least one of the resin-made crown-shaped cage 1 and the resin-made seal 6 is required to be produced by using the molding of the present invention.

As the method of the present invention for lubricating the rolling bearing, in addition to the above-described lubrication which is performed with grease, any of oil lubrication, air oil lubrication, and solid lubrication may be adopted. In the lubrication which is performed with grease or oil, it is possible to use not only grease or oil such as mineral oil, derived from the fossil resources, which has been conventionally used, but also grease or oil to which biodegradability has been imparted and grease or oil to which a biomass-derived material has been applied.

The rolling bearing of the present invention may be any of a ball bearing, a tapered roller bearing, a self-aligning roller bearing, and a needle roller bearing.

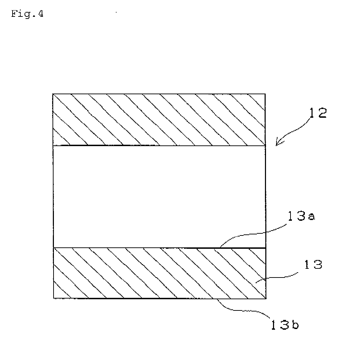

Fig. 4 shows an example of the resin-made sliding bearing which is the injection-molded article of the present invention. Fig. 4 is a sectional view cf the resin-made sliding bearing.

As shown in Fig. 4, in a resin-made sliding bearing 12 integrally formed by performing the injection molding, a sliding surface for a shaft consists of an inner peripheral surface 13a of an injection-molded article 13, and a surface opposite to the sliding surface consists of a peripheral surface 13b of the cylindrical injection-molded article 13. The peripheral surface 13b is fixed to a mating material (not shown). The injection-molded article 13 is formed by injection-molding the resin composition.

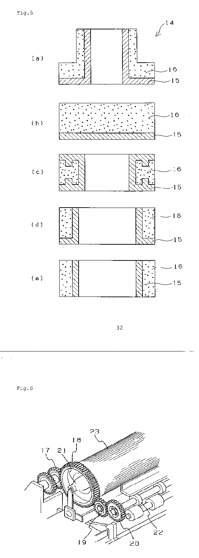

Fig. 5 shows another example of the resin-made sliding bearing which is the injection-molded article of the present invention. Figs. 5(a) through 5(e) are sectional views of the resin-made sliding bearing.

A resin-made sliding bearing 14 is formed by compounding the insert-molded (injection-molded article 15) resin composition with a molding 16 made of a metal or a sintered metal. At this time, the injection-molded article 15 and the molding 16 are joined with each other by means of any adopted adhesive means, provided that a high adhesion can be obtained. As examples, an anchor effect, an adhesive agent for epoxy resin, silane coupling treatment are listed. The configuration of the resin-made sliding bearing 14 includes a flange-attached bush type (Fig. 5(a)), a thrust type (Fig. 5(b)), a radial type (Fig. 5(d)), a type in which the thrust type and the radial type are mixed with each other (Figs. 5(c), 5(e)). In dependence on the configuration of a sliding portion, an optimum configuration can be selected for the resin-made sliding bearing. It is possible to shape the resin-made sliding bearing having a groove formed on a sliding surface thereof.

Fig. 6 shows an example of the resin-made gear which is the injection-molded article of the present invention. Fig. 6 is a partly enlarged perspective view of the periphery of a fixing portion of an image-forming apparatus.

In Fig. 6, 17, 18, 19, 20, 21, 22, and 23 denote a driving gear, a fixing roller gear, an idler gear, a paper discharge roller gear, a heater, a paper discharge roller, and a fixing roller respectively. Of these gears, the driving gear 17, the fixing roller gear 18, the idler gear 19, and the paper discharge roller gear 20 are the resin-made gears of the present invention.

### EXAMPLES

Materials used in the examples of the present invention and the comparative examples are shown below. The letters in parentheses show abbreviations shown in table 1.
(1) Polymer: polybutylene succinate resin (PBS), Bionolle #1020 produced by SHOWA DENKO K.K.
(2) Inorganic reinforcing material: glass fiber (GF), CSO3JA429T produced by Owens Corning Japan Ltd.
(3) Organic substance having carbodiimide structure: carbodiimide resin (PCDI), CARBODILITE LA-1 produced by Nisshinbo Industries, Inc.

### Examples 1 through 8 and Comparative Examples 1 through 5

Pellets to be molded were produced at mixing ratios shown in table 1 by using a biaxial kneading machine. The glass fiber (GF) and the carbodiimide resin (PCDI) were added to the PBS by using a side feed. The numerical values shown in table 1 are weight percents.

Injection-molded articles were obtained by drying the obtained pellets at 80°C for 10 hours and thereafter injection-molding them. Specimens for use in a flexural strength test and resin-made crown-shaped cages were formed from the injection-molded articles. The flexural strength test was conducted by using the specimens for use in the flexural strength test. The moldability of each of the pellets into the resin-made crown-shaped cage was evaluated at the step of forming them.

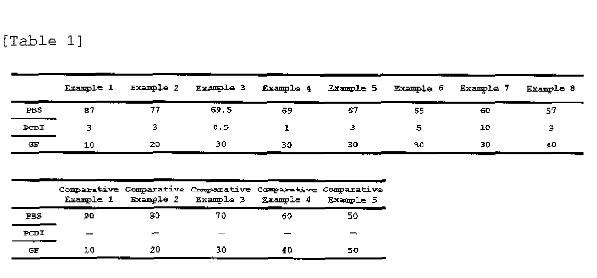

### Flexural Strength Test

The flexural strength test was conducted in accordance with JIS Standards K7171. The flexural strength and flexural strain of each of the specimens having a thickness of 3mm were measured by setting the distance between fulcrums to 50mm, flexural speed to 1mm/minute, and the temperature to a room temperature. Table 2 shows the results.

### Cage Molding Test

crown-shaped cages which can be used for a rolling bearing (outer diameter: 22mm, inner diameter: 8mm, width: 7mm) equivalent to 608 were formed to check whether the pellets were moldable. Pellets which could be injection-molded without cracking were marked with O, whereas pellets which cracked when they were taken cut of an injection-molding die were unmoldable and marked with x. Table 2 shows the results.

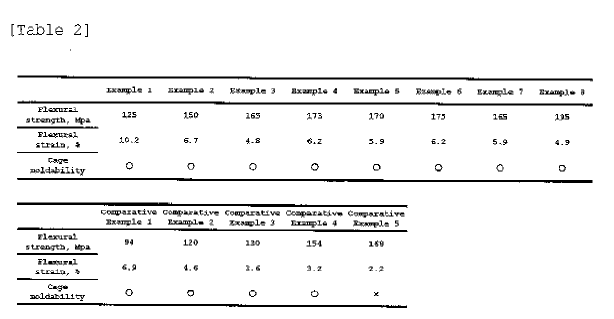

By setting comparative examples in which the addition amount of the polymer and that of the glass fiber (GF) were equal to those of injection-molded articles which could be formed by injection molding without cracking as the references, examples corresponding thereto were comparatively evaluated. The toughness was evaluated in terms of flexural strain. Table 3 shows the results.

**[Table 3]**

| | Example 1 | Exemple 2 | Example 3 | Example 4 | Example 5 | Example 6 | Example 7 | Example 8 |
|---|---|---|---|---|---|---|---|---|
| Reference for Comparison | Comparative Example | Comparative 1 Example | Comparative 2 Example 3 | Comparative Example 3 | Comparative Example | Comparative 3 Example 3 | Comparative Example 3 | Comparative Example 4 |
| strength increase and decrease rate | 33% | 25% | 27% | 33% | 31% | 35% | 27% | 27% |
| Toughness increase and decrease rate | 47% | 45% | 33% | 71% | 63% | 71% | 63% | 54% |
| Gage moldability | ○ | ○ | ○ | ○ | ○ | ○ | ○ | ○ |

As shown in table 3, the strength increase and decrease rate of the examples 1 through 8 and the toughness increase and decrease rate thereof show an increase, which indicates that the injection-molded article thereof maintains the injection moldability and were capable of improving strength and toughness. As shown in table 2, comparing the example 4 and the comparative example 5 having an almost equal flexural strength with each other, there is a significant difference therebetween in the cage moldability. This indicates the effectiveness of the addition of the polycarbodiimide resin (PCDI).

### Friction and Wear Test

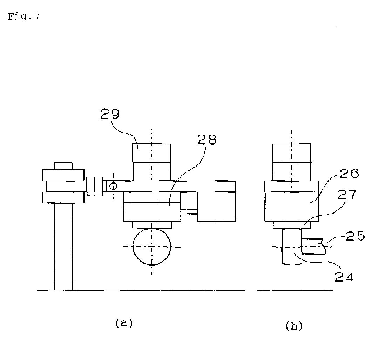

Ring-shaped specimens were obtained by abrading the surface of obtained dumbbell-shaped specimens with sandpaper (#2000) to remove a resin skin layer and thereafter adjusting the surface roughness thereof. The obtained, ring-shaped specimens were subjected to a friction and wear test by using a Savin-type friction and wear testing machine. Fig. 7(a) is a front view of the Savin-type friction and wear testing machine. Fig. 7 (b) is a side view thereof. A ring-shaped specimen 24 was mounted on a rotational shaft 25, and a steel plate 27 (SCM415: carburized steel quenched and tempered (Hv 700, surface roughness Ra 0.01µm)) was fixed to an air slider 28 of an arm portion 26. While a predetermined load 29 was being applied to the ring-shaped specimen 24 from an upper portion in Fig. 7, the ring-shaped specimen 24 contacted the steel plate 27 with the ring-shaped specimen 24 rotating. A specific wear volume of each specimen was investigated after the testing machine was operated for a predetermined period of time. The conditions are as shown below. Table 4 shows the results.
Mating material: SUJ2
Temperature: Room temperature
Period of time for evaluation: one hour
Circumferential speed: 0.05m/second
Load: 200N
Lubricating oil: not used

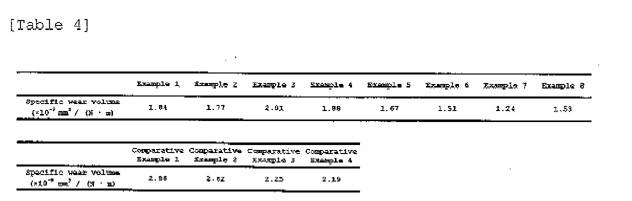

The specimens of the examples 1 through 8 in which the carbodiimide resin was added to the PBS had smaller specific wear volumes than those of the comparative examples 1 through 4 and thus hadwear resistances improved over those of the comparative examples 1 through 4.

### INDUSTRIAL APPLICABILITY

Because the injection-molded article is allowed to maintain excellent injection moldability and have improved mechanical strength and toughness, the injection-molded article can be adapted to suit a case in which it has a complicated and thin configuration and a case in which the injection-molded article is deformed like snap fit when it is used as a product or fastened to other parts. For example, the injection-molded article is applicable as the resin-made cage and the resin-made seal. In addition, because the injection-molded article of the present invention has a high wear resistance, the injection-molded article is applicable as sliding members such as the resin-made sliding bearing and the resin-made gear.

### EXPLANATION OF REFERENCE NUMERALS AND SYMBOLS

- 1:: cage for rolling bearing
- 2:: cage body
- 3:: cage claw
- 4:: pocket
- 5:: flat portion
- 6:: resin-made seal
- 7:: grease-enclosed deep groove ball bearing
- 8:: inner ring
- 9:: outer ring
- 10:: rolling element
- 11:: lubricating grease
- 12, 14:: resin-made sliding bearing
- 13, 15:: injection-molded article
- 16:: Molding consisting of metal or sintered metal
- 17:: driving gear
- 18:: fixing roller gear
- 19:: idler gear
- 20:: paper discharge roller gear
- 21:: heater
- 22:: paper discharge roller
- 23:: fixing roller
- 24:: ring-shaped specimen
- 25:: rotational shaft
- 26:: arm portion
- 27:: steel plate
- 28:: air slider
- 29:: load

## Claims

1. An injection molded article comprising a resin composition,
wherein said resin composition is composed of a polymer having an ester bond in a molecule thereof, an inorganic reinforcing material, and an organic substance having a carbodiimide structure.

2. The injection molded article according to claim 1, wherein said polymer is a biodegradable polyester polymer.

3. The injection molded article according to claim 2, wherein said biodegradable polyester polymer is polybutylene succinate.

4. The injection molded article according to claim 1, wherein said inorganic reinforcing material is fibrous.

5. The injection molded article according to claim 1, wherein an addition amount of said inorganic reinforcing material is not less than 10 wt% nor more than 40 wt% for an entire resin composition.

6. The injection molded article according to claim 1, wherein an organic substance having said carbodiimide structure is polycarbodiimide resin.

7. The injection molded article according to claim 6, wherein an addition amount of said carbodiimide resin for an entire resin composition is not less than 0.5 wt% nor more than 10 wt%.

8. A resin-made crown-shaped cage, for a rolling bearing, made of an injection-molded article of a resin composition, wherein said injection-molded article is as claimed in claim 1.

9. A resin-made seal, for a rolling bearing, made of an injection-molded article of a resin composition, wherein said injection-molded article is as claimed in claim 1.

10. A rolling bearing including at least one of a resin-made crown-shaped cage and a resin-made seal as a constituent element thereof, wherein said resin-made crown-shaped cage is as defined in claim 8, and said resin-made seal is as defined in claim 9.

11. A resin-made sliding bearing made of an injection-molded article of a resin composition, wherein said injection-molded article is as defined in claim 1.

12. A resin-made gear made of an injection-molded article of a resin composition, wherein said injection-molded article is as defined in claim 1.
